# EUROPEAN PATENT APPLICATION

(11) **EP 4 601 068 A1**
(43) Date of publication of application: **13.08.2025**
(21) Application number: 24305216.4
(22) Date of filing: 09.02.2024
(51) Int. Cl.: H01M 10/058, H01M 10/42, H01M 10/04, H01M 10/052, H01M 10/0566

(54) **PROCESS FOR WETTING A DRY ASSEMBLY FOR PRODUCING AN ELECTROCHEMICAL CELL**

(71) Applicant: Automotive Cells Company SE, 33520 Bruges (FR)
(72) Inventor: CHOI, Hangjune, 33200 BORDEAUX (FR)
(74) Representative: Lavoix

(57) **Abstract**

The invention concerns a process (10) for wetting at least one dry assembly (15) for producing an electrochemical cell, the process comprising a) providing at least one dry assembly (15) comprising at least one cathode (20), at least one anode (25) and an at least partially metallic cell housing (35), the at least one cathode (20) and the at least one anode (25) being inserted in the at least one cell housing (35); b) dosing an electrolyte solution within the respective cell housing (35) and sealing the respective cell housing (35); c) positioning each of the sealed cell housing (35) between a pair of electromagnetic coils (40); and d) supplying each coil (40) with a respective electrical current.

## Description

The present invention concerns a process for wetting at least one dry assembly for producing an electrochemical cell, and an electrochemical cell obtainable by such a wetting process.

An electrochemical cell, and in particular a lithium-ion cell, comprises a housing containing at least one cathode and one anode separated by a separator.

In an electrochemical cell, each of the cathode and the anode comprises a porous active material and a current collector.

An electrolyte solution, enabling ions exchanges between the cathode and the anode, impregnates the cathode and the anode, as well as the separator.

The wetting degree considerably influences the electrochemical cell performances. Consequently, the wetting of the electrode active materials with the electrolyte solution is one of the major challenges in the production of high-performance electrochemical battery cells. Among others, insufficient or non-uniform electrolyte wetting of porous electrodes may lead to irregular reactions in the electrodes and/or unstable formation of the solid-electrolyte interface film. This can lead to poor cell performance and/or poor cycle life.

In addition, incomplete wetting may enable the formation of lithium dendrites, which may cause severe safety issues.

Incompletely wetted active material may also lead to underutilization of electrode capacity and increase electrode resistance.

Hence, the wetting step is one of the key steps in manufacturing electrochemical cells.

The wetting step comprises the dosing of an electrolyte solution in the cell, for example with a precision pump, the sealing of the cell, and the warehousing of the cell for several hours or several days, to enable permeation of the electrolyte solution in the pores of the active materials.

Due to the warehousing duration, the wetting step is a bottleneck step in the batteries manufacturing processes.

To reduce the warehousing duration, the warehousing can take place at an elevated temperature. Alternatively or in addition, the spreading of the electrolyte solution before and/or after the sealing of the cell can be stimulated, for example by centrifugating the cell or by a pressure force on the external surfaces of the cell housing.

However, the wetting step is still too long for industrial processes.

Furthermore, centrifuging the cells can be rather complex to implement, in particular at an industrial scale, and can induce damages in the active materials.

Hence, one aim of the invention is to provide a faster wetting process for wetting at least one electrochemical cell, the process being easy to implement and allowing a reduced time consumption.

To this aim, process for wetting at least one dry assembly for producing an electrochemical cell, the process comprising:
a) providing at least one dry assembly comprising:
   - at least one cathode comprising a porous cathode active material ;
   - at least one anode comprising a porous anode active material ; and
   - a cell housing, the at least one cathode and the at least one anode being inserted in the at least one cell housing, the cell housing being at least partially metallic,
b) dosing an electrolyte solution within the respective cell housing and sealing the respective cell housing,
c) positioning each of the sealed cell housing between a pair of electromagnetic coils, and
d) supplying each coil with a respective electrical current.

Supplying each coil of a pair of electromagnetic coils between which the cell housing filled with the electrolyte solution and the electrochemical cell(s) allows creating a magnetic field and inducing eddy currents in the metallic material of the housing. These eddy currents are the source of an induced magnetic field, which opposes to the coils magnetic field. Due to the coil magnetic field and the induced magnetic field, opposite surfaces of the housing are squeezed towards each other, thereby forcing the electrolyte solution to permeate the pores of the electrode active materials.

The squeezing of the housings can easily be controlled by choosing the intensity and/or the waveform of the electrical current, so as to achieve optimal wetting in a reduced operation time.

Further, the eddy current causes a Joule heating of the housings and consequently, of the electrolyte solution. The electrolyte solution can thus more easily permeate the pores of the active material.

According to other advantageous aspects of the invention, the process for wetting at least one electrochemical cell comprises one or more of the following features, taken in isolation or in any technically possible combination:
- the at least one cell housing has at least two parallel faces, and at step c, the sealed cell housing and the respective pair of coils are positioned such that a magnetic axis of each of the two electromagnetic coils is substantially orthogonal to said two parallel faces;
- at step b, at least two cell housings are sealed and at step c, at least two pairs of electromagnetic coils of two sealed cell housings share one of their two electromagnetic coils, the respective cell housings being positioned on either side of the shared electromagnetic coil;

- at step b, N cell housings are sealed, N being a positive integer equal to or greater than two, and at step c, N+1 electromagnetics coils and said N sealed cell housings are positioned alternately along the magnetic axis of all the electromagnetic coils;
- the electrical current is an alternating or pulsed current.
- during step d, the respective electrical currents supplied to each electromagnetic coil of a given pair of electromagnetic coils are identical;
- the cell housing comprises aluminum;
- the electrochemical cell is a lithium-ion cell;
- at step d, the electrical current is supplied during less than 10 hours;
- at step d, the electrical current is supplied for more than 5 minutes;
- each electromagnetic coil is arranged in a respective coil housing, the coil housing comprising at least one positioning mark for positioning the respective cell housing; and
- any two coil housings of two successive coil elements form a slide for positioning a respective cell housing.

The invention also relates to an electrochemical cell obtainable by the wetting process according to any of the preceding embodiments.

The invention will appear more clearly on reading the following description, given only as a non-limiting example, and made with reference to the drawings in which:
- figure 1 is a flow chart of the process according to the invention;
- figure 2 is an exemplary electrochemical assembly on which the process of figure 1 is carried out.
- figure 3 is a 3D view of an example of a result of step c of the process of figure 2;
- figure 4 is an exploded view of part of the elements of figure 3, wherein the coil housings have been omitted.

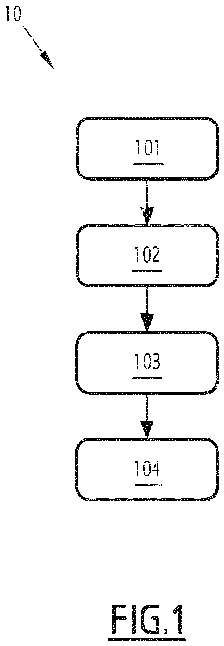

The process 10 according to the invention is described in reference to figure 1.

The process 10 is intended for wetting at least one dry assembly 15 for producing an electrochemical cell.

For example, the electrochemical cell is a lithium-ion cell.

To this end, the process 10 comprises a provision step 101, a filling step 102, a positioning step 103 and an electrical current supply step 104.

The provision step 101 comprises providing at least one dry assembly 15.

A dry assembly 15 comprises at least a cathode 20 comprising a porous cathode active material 20A, at least an anode 25 comprising a porous anode active material 25A, and a cell housing 35.

The dry assembly 15 is a so-called "dry" assembly, insofar as none of the cathode active material 20A and the anode active material 25A has yet been impregnated with an electrolyte solution at the beginning of provision step 101.

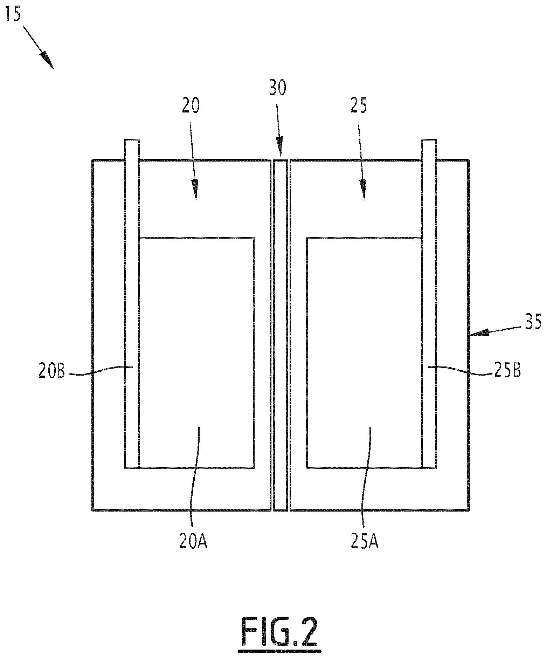

An exemplary dry assembly 15 is shown in figure 2.

In this example, the cathode 20 and the anode 25 are separated by a separator 30, the cathode active material 20A facing the anode active material 25A.

Each of the cathode 20 and the anode 25 are spaced apart from the separator 30.

The separator 30 is configured for enabling controlled ion exchanges between the cathode 20 and the anode 25 and preventing an electrical short-circuit between them.

The dry assembly 15 of figure 2 further comprises a cathode current collector 20B and an anode current collector 25B for ensuring electrical contact with another electrochemical cell and/or an external electric circuit.

The cathode current collector 20B is in direct contact with the cathode active material 20A.

The anode current collector 25B is in direct contact with the anode active material 25A.

The cathode 20 and the anode 25, and here the separator 30, are inserted in the cell housing 35.

The cell housing 35 is at least partially made of metal.

The cell housing 35 delimits a reception volume. The cathode 20 and the anode 25, and here the separator 30, are entirely inserted inside the reception volume.

The cell housing 35 is configured such that at least two metallic areas of the cell housing 35 frame the dry assembly 15 after insertion thereof.

A shape of the cell housing 35 is preferably chosen according to an external shape of the dry assembly 15.

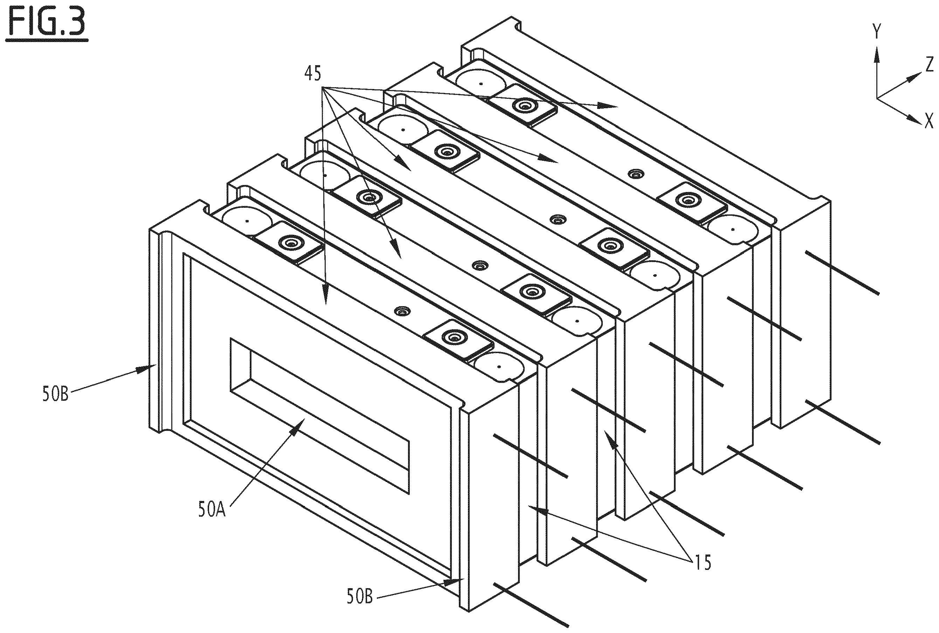

The cell housing 35 is advantageously prismatic, advantageously parallelepiped as shown on figure 3. In this case, the cell housing 35 comprises at least two parallel faces.

The cell housing 35 preferably comprises, more preferably consists of, aluminum.

One or multiple pairs of cathode 20 and anode 25 can be inserted in the same cell housing 35.

The number of pairs of cathode 20 and anode 25 inserted in the same cell housing 35 depends, for example, on the voltage and the power to be delivered by a battery formed with the electrochemical cell(s) produced after the wetting process 10.

A plurality of dry assemblies 15 can be inserted in a plurality of housings 35 in parallel, in particular when the process 10 is performed at an industrial scale. In this case, all the dry assemblies 15 can be identical and all the cell housings 35 can be identical.

The filling step 102 comprises the dosing of an electrolyte solution within each of the cell housings 35.

The filling step 102 is performed with dosing means (not represented).

Preferably, the dosing means comprises a precision pump. This allows controlling precisely the initial weight of electrolyte solution in the cell housing 35 before the positioning step 103.

The electrolyte solution is configured to enable ions exchanges in and between the cathode 20, the anode 25 and the separator 30.

The electrolyte solution may be any electrolyte solution of common knowledge. For example, the electrolyte solution may comprise a non aqueous lithium salt and a non aqueous solvent.

Once the electrolyte solution is dosed in each of the housings 35, the filling step 102 comprises the sealing of each of the cell housings 35.

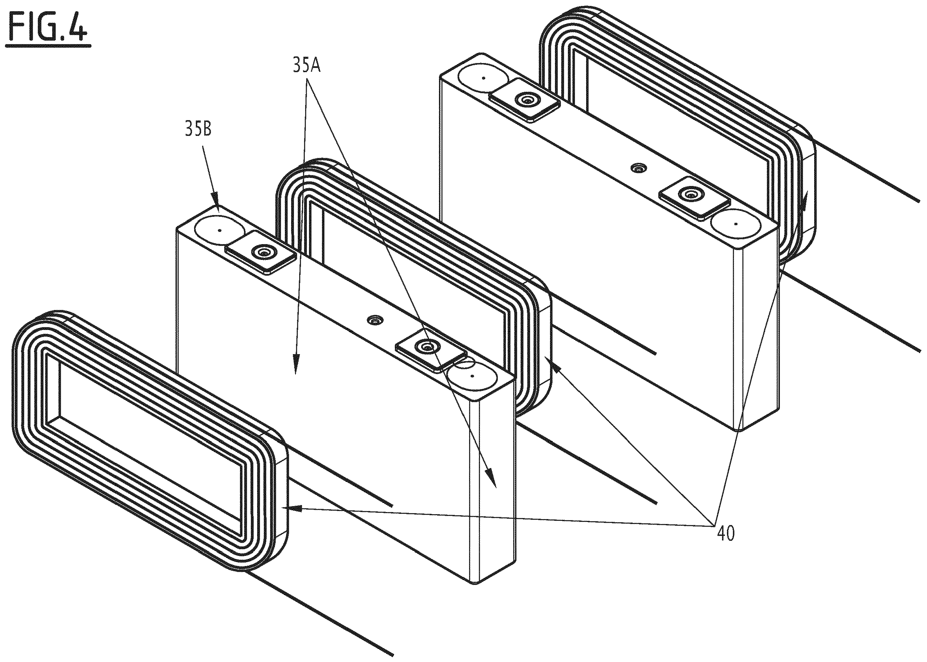

An exemplary sealed cell housing 35 resulting of the filling step 102 can be observed on the exploded view of figure 4.

In this example, all the cell housings 35 are parallelepiped. Five external sides 35A and an upper closing wall 35 B of a given cell housing 35 form a sealed parallelepiped volume containing the electrolyte solution.

Then, at positioning step 103, each of the sealed cell housing 35 is positioned between a respective pair of electromagnetic coils 40.

Each electromagnetic coils 40 comprises electric connection means for connection to an electrical power supplier controlled by an electrical waveform generator (not represented).

Each electromagnetic coil 40 is able to generate a magnetic field when supplied with an electrical current from the electrical power supplier.

Each electromagnetic coil 40 is characterized by a magnetic axis Z.

The general shape of the electromagnetic coils 40 can be chosen according to the shape of the cell housing 35 and/or according to the magnetic field to be generated.

For example, each electromagnetic coil 40 comprises loops extending in a transverse plane XY orthogonal to the magnetic axis Z.

The loops can be approximately rectangular and centered on the magnetic axis Z, as shown on figure 4 and figure 5, but other shapes, such as squares, circles or ellipses can be considered.

In a particular embodiment, multiple loops may be combined with different winding shapes so as to form one or more electromagnetic coils 40 facing a side or face of one cell housing 35. For example, an array of electromagnetic coils 40 can face a side or face of one cell housing 35, the loops of all the electromagnetic coils 40 having the same shape or at least two electromagnetic coils 40 having different loop shapes.

In particular, a plurality of electromagnetic coils 40 are, for example, arranged next to one another in a plane XY, such that a side or face of the cell housing 35 faces the plurality of electromagnetic coils 40 according to the magnetic axis Z.

The magnetic axis of said plurality of coils 40 are here parallel to one another.

Each of the sealed cell housing 35 is then, for example, positioned between a pair of arrangements, in particular a pair of arrays, of electromagnetic coils 40.

Each of the sealed cell housing 35 is positioned between a pair of electromagnetic coils 40, with one electromagnetic coil from one of the arrays and one electromagnetic coil from the other array.

The layout of the arrays of electromagnetic coils 40 are, for example, invariant by translation according to the direction of the magnetic axis Z.

Among others, the shape of the loops of the electromagnetic coils 40 can be chosen to form a magnetic field as homogenous as possible in the closest side of the cell housing 35.

If the cell housing 35 is prismatic, the at least two opposite faces of the cell housing 35 and the respective pair of electromagnetic coils 40 are positioned such that the magnetic axis Z of each of the two electromagnetic coils 40 is substantially orthogonal to said faces, as represented on figures 3 and 4.

If a plurality of identical sealed cell housings 35 are provided at the end of filling step 102, an assembly of identical electromagnetic coils 40 having the same magnetic axis Z and regularly spaced apart from each other can be provided at positioning step 103.

The plurality of identical sealed cell housings 35 can then be positioned at once by automated moving means (not represented).

Preferably, each electromagnetic coil 40 is provided within a respective coil housing 45.

The coil housing 45 can be made of plastic.

The coil housing 45 comprises two opposite faces, each being able to cooperate with one of a pair of opposite faces of a respective cell housing 35.

The coil housing 45 can comprise one or more positioning marks 50 for ensuring an optimal positioning of the respective cell housing 35, and hence better reproducibility of the wetting process 10.

The positioning marks 50 allow, for example, indexing the placement of the respective cell housing 35 in regard to the coil housing 45.

The positioning marks 50 can be spread on at least two opposite sides of the coil housing 45 on either side of the cell housing 35, as shown on figure 3.

The positioning marks 50 can for example be chosen among a recess, a colored mark and a stop element provided in the coil housing 45.

For example, the positioning mark 50 of figure 3 comprises a rectangular recess 50A made in the coil housing 45. This squared recess 50A is coaxial with the magnetic axis Z, such that the centering of the respective cell housing 35 can be easily controlled by an operator, as can be observed on figure 3.

Alternatively or additionally, the positioning marks 50 of figure 3 comprises stop elements 50B protruding from the coil housing 45 along the magnetic axis.

Advantageously, the positioning marks 50 of the coil housings 45 of a pair of electromagnetic coils 40 define a slide for easy positioning of the respective sealed cell housing 45.

An exemplary embodiment of such a slide can be observed on figure 3 In this case each coil housing 45 has two stop elements 50B on each face facing a respective cell housing 35, protruding from the coil housing 45 along the magnetic axis Z at each side of the coil housing 45 along a longitudinal direction X orthogonal to the magnetic axis Z.

The four stop elements 50 B of a pair of electromagnetic coils 40 facing each other form a slide for guiding the respective sealed cell housing 35 in translation along a positioning direction Y orthogonal to the magnetic axis Z and the longitudinal direction X.

This provision allows further automation of the positioning step 103, which can be performed with automated moving means (not represented) able to translate one or more sealed cell housings 35 in translation along a slide main axis Y.

At the end of the positioning step 103, each sealed cell housing 35 is framed by two successive electromagnetic coils 40.

At this stage, each positioned cell housing 35 can be either spaced apart from, or alternatively in direct contact with one or both of the respective electromagnetic coils 40 or, if applying, the respective coil housing 45.

In a particular embodiment, strictly more than two sealed cell housings 35 are provided at the beginning of positioning step 103.

In this case, two pairs of electromagnetic coils 40 of two sealed cell housings 35 can share one of their two electromagnetic coils 40, the respective cell housings 35 being positioned on either side of the shared electromagnetic coil 40.

For example, N sealed cell housings are formed at the filling step 102, N being a positive integer equal to or greater than two. At the positioning step 103, N+1 electromagnetics coils 40 and N sealed cell housings 35 are positioned alternately along the magnetic axis Z of all the electromagnetic coils 40.

In this case, all the electromagnetic coils 40 can further be identical and the sealed cell housings 35 and the electromagnetic coils 40 can be positioned alternately along the magnetic axis Z of the electromagnetic coils 40, as shown on figure 3.

This allows reducing the number of electromagnetic coils 40 required. This also allows further automation of the wetting process 10 and/or better reproducibility of the wetting process 10.

Electrical current supply step 104 can then be performed.

To this end, if not already the case, each of the electromagnetic coils 40 is connected to an electric power supplier.

A plurality of electromagnetic coils 40 can share the same electric power supplier.

Each electric power supplier supplies an electric current to the respective electromagnetic coils 40.

Consequently, each electromagnetic coil 40 generates a coil magnetic field in the surrounding space, and in particular in the respective sealed cell housing 35.

The coil magnetic field induces eddy currents in the metallic parts of the cell housing 35.

These eddy currents induced by the two electromagnetic coils 40 of a given pair of coils in turn induce an induced magnetic field and the pushing of the respective opposite faces of the cell housing 35 towards each other, effectively squeezing the respective cell housing 35. Due to this squeezing, the electrolyte solution gets compressed, and the increased pressure pushes the electrolyte into the pores of the active material.

Each electric current is for example in a waveform of a function chosen among a sinusoidal, saw-shaped, pulsed, and square wave function, or alternatively of any alternating function

This allows inducing an iterative squeezing of the respective cell housing 35, and hence a deeper impregnation of the cathode and anode active materials 20A, 25A with the electrolyte solution.

Alternatively, each electric current can be supplied in the form of an electric pulse.

The shapes and/or the intensities and/or the phases of the electric currents supplied to each electromagnetic coil 40 of a given pair of electromagnetic coils can be chosen according to the electrolyte solution, and/or to the natures and/or thicknesses anode and cathode active materials 20A, 25A, and/or to a wished maximum duration of the wetting process 10.

Hence, the wetting process 10 according to the invention is highly tunable.

The electric currents supplied to each electromagnetic coil 40 of a given pair of electromagnetic coils are for example the same and here, in phase.

Depending on the winding direction of these two electromagnetic coils 40, the electric currents can be in phase or in opposition of phase, such that two opposite sides of the respective cell housing 35 along the magnetic axis Z move in opposition of phase along this direction.

Preferably, the electrical currents are supplied in the electromagnetic coils 40 of a given pair of electromagnetic coils for less than 10 hours. More preferably, the electrical currents are supplied for less than 9 hours, less than 8 hours, less than 7 hours, less than 6 hours, less than 5 hours, less than 4 hours.

Preferably, the electrical current are supplied in the electromagnetic coils 40 of a given pair of electromagnetic coils for more than five minutes, more than 10 minutes, more than 20 minutes, more than 30 minutes, more than 1 hour, more than 2 hours, more than 3 hours, more than 4 hours.

In order to fix the ideas with current orders of magnitude, the durations mentioned in the two preceding paragraphs can be adapted for a cell housing having a total volume of around 150 mL, the volume of the electrolyte solution dosed representing approximately a third of this total volume, the volume of electrodes and separators representing approximately two third of this total volume.

Once electrical current step 104 is over, the sealed cell housings 35 are ready for a potential further battery manufacturing step. To this end, they can be separated from the electromagnetic coils 40 by the same moving means as for the positioning step 103.

The invention also relates to a wetted electrochemical cell obtainable by the wetting process 10 according to the invention.

## Claims

1. A process (10) for wetting at least one dry assembly (15) for producing an electrochemical cell, the process comprising:
a. providing at least one dry assembly (15) comprising:
- at least one cathode (20) comprising a porous cathode active material (20A);
- at least one anode (25) comprising a porous anode active material (25A); and
- a cell housing (35),
the at least one cathode (20) and the at least one anode (25) being inserted in the at least one cell housing (35), the cell housing (35) being at least partially metallic,
b. dosing an electrolyte solution within the respective cell housing (35) and sealing the respective cell housing (35),
c. positioning each of the sealed cell housing (35) between a pair of electromagnetic coils (40), and
d. supplying each coil (40) with a respective electrical current.

2. The process (10) according to claim 1, wherein:
- the at least one cell housing (35) has at least two parallel faces, and
- at step c, the sealed cell housing (35) and the respective pair of coils (40) are positioned such that a magnetic axis (Z) of each of the two electromagnetic coils (40) is substantially orthogonal to said two parallel faces.

3. The process (10) according to claim 2, wherein at step b, at least two cell housings (35) are sealed and at step c, at least two pairs of electromagnetic coils (40) of two sealed cell housings (35) share one of their two electromagnetic coils (40), the respective cell housings (35) being positioned on either side of the shared electromagnetic coil (40).

4. The process (10) according to claim 3, wherein at step b, N cell housings (35) are sealed, N being a positive integer equal to or greater than two, and at step c, N+1 electromagnetics coils (40) and said N sealed cell housings (35) are positioned alternately along the magnetic axis (Z) of all the electromagnetic coils.

5. The process (10) according to any of the preceding claims, wherein the electrical current is an alternating or pulsed current.

6. The process (10) according to claim 5, wherein, during step d, the respective electrical currents supplied to each electromagnetic coil (40) of a given pair of electromagnetic coils are identical.

7. The process (10) according to any of the preceding claims, wherein the cell housing (35) comprises aluminum.

8. The process (10) according to any of the preceding claims, wherein the electrochemical cell is a lithium-ion cell.

9. The process (10) according to any of the preceding claims, wherein at step d, the electrical current is supplied during less than 10 hours.

10. The process (10) according to any of the preceding claims, wherein at step d, the electrical current is supplied for more than 5 minutes.

11. The process (10) according to any of the preceding claims, wherein each electromagnetic coil (40) is arranged in a respective coil housing (45), the coil housing (45) comprising at least one positioning mark (50, 50A, 50B) for positioning the respective cell housing (35).

12. The process (10) according to claim 11, wherein any two coil housings (45) of two successive coil elements form a slide for positioning a respective cell housing (35).

13. An electrochemical cell obtainable by the wetting process (10) according to any of claims 1 to 12.
